# EUROPEAN PATENT APPLICATION

(11) **EP 4 660 061 A1**
(43) Date of publication of application: **10.12.2025**
(21) Application number: 24179622.6
(22) Date of filing: 03.06.2024
(51) Int. Cl.: B62D 53/00, B62D 53/08

(54) **ARRANGEMENT OF A VEHICLE**

(71) Applicant: VOLVO TRUCK CORPORATION, 405 08 Göteborg (SE)
(72) Inventor: Basar, Özkan, 417 10 Göteborg (SE)
(74) Representative: Valea AB

(57) **Abstract**

A vehicle (1) comprising a towing unit and one or more towed units (20) extending along a longitudinal axis (ax) is provided. The vehicle (1) is arranged with components associated with respective stiffness values affecting lateral forces applied to the vehicle (1) as the vehicle (1) is moving laterally. The vehicle (1) is configured such that the components are arranged along the longitudinal axis (ax) to have increasing stiffness values towards a rear of the vehicle (1) and/or a rear of the respective one or more towed units (20).

## Description

### TECHNICAL FIELD

The disclosure relates generally to automotive technology. In particular aspects, the disclosure relates to an arrangement of a vehicle, such as to improve a lateral stability of vehicles comprising one or more towed units such as trailers and dollys. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Combination vehicles have high efficiency as one tractor can transport more goods when it tows many trailers.

Combination vehicles may further be better from an environmental and cost perspective.

Both aspects above are particularly true the more towed units such as trailers, the combination vehicle comprises. The more weight that can be towed with one truck or tractor, the less fuel is used per weight towed. Another aspect is that there may be a limit to how much weight that can be placed on each axle. In other words, the longer the combination vehicle, the more cost-efficient it may be.

Combination vehicles may however be more unstable due to rearward amplification, and the towed unit may be subject to oscillating forces increasing to the rear of the combination vehicle when the vehicle is moving laterally, e.g., during a lane change. This is particularly true for combination vehicles comprising more than one towed unit and the effect grows larger for every towed unit.

As electric trailers emerge, tires are closer to the middle of the trailer so that there is less weight on the tractor. This may further result in more unstable vehicles.

It is known that the placement of the center of gravity of a trailer with respect to the axles has an effect on the stability of the trailer. As the center of gravity of the trailer moves towards the rear compared to the trailer axles, the trailer becomes more unstable. Loading of trailers may therefore be performed carefully to avoid having the center of gravity of the trailer towards the rear of the trailer. While this may improve the stability of the vehicle, it may still not be sufficient and instabilities causing difficulties to control the vehicle or to have the vehicle remain after moving laterally may still be present.

Hence, there is a strive to improve stability of vehicles comprising one or more towed units.

### SUMMARY

According to a first aspect of the disclosure, a vehicle comprising a towing unit and one or more towed units extending along a longitudinal axis is provided. The vehicle is arranged with components associated with respective stiffness values affecting lateral forces applied to the vehicle as the vehicle is moving laterally. The vehicle is configured such that the components are arranged along the longitudinal axis to have increasing stiffness values towards a rear of the vehicle and/or a rear of the respective one or more towed units. Stiffness values as used herein may correspond to stiffness of the respective components and may relate to stiffness per axle and/or wheel/tire of the vehicle.

The lateral movement may be any suitable lateral movement, e.g., due to hard wind, due to lane change, due to evasive manoeuvres, due to turning, etc.

The first aspect of the disclosure may seek to improve stability of a vehicle, in particular to reduce effects of rearward amplification as the vehicle is travelling forward along the longitudinal axis, and while also moving laterally such as when performing a lane change. The longitudinal axis is parallel to the ground, road or a surface to be travelled by the vehicle. The longitudinal axis may herein be a reference to the placement order of the different towing and the one or more towed units in a longitudinal direction.

A technical benefit may include improved stability of the vehicle. This is since when the components are arranged along the longitudinal axis of the trailer to have increasing stiffness values towards the rear of the vehicle and/or the rear of the respective one or more towed units, this means that the further to the rear of the vehicle or respective towed unit, resulting lateral forces caused by lateral movement of the vehicle will be increased for components closer to the rear of the vehicle or respective towed unit, such that the components may absorb the oscillating motions and remain stable.

In examples herein, towed units may be trailers, semi-trailers and/or dollys.

In examples herein, the vehicle may be arranged to have improved stability when moving laterally, as it is travelling longitudinally, e.g., along the longitudinal axis. In examples herein, rear of the vehicle means the component furthest away from the towing unit, along the longitudinal axis.

In a similar manner, in examples herein, rear of a respective towed unit means the component furthest away from the towing unit, along the longitudinal axis.

Examples herein further improve stability by handling yaw rate amplification which may otherwise occur if not having increased stiffness values such that rotational oscillations may be decreased to further improve stability of the vehicle.

Optionally in some examples, including in at least one preferred example, the components comprise tires. In these examples respective cornering stiffness of the tires represent the respective stiffness values.

A technical benefit may include improved stability of the vehicle, this is since increasing lateral forces for rear tires of the vehicle or of the towed units will reduce rearward amplification when moving in a lateral direction.

Optionally in some examples, including in at least one preferred example, the tires are arranged along the longitudinal axis such that tires of a rearmost axle of a first towed unit of the one or more towed units is associated with higher stiffness values than tires of one or more axles in front of the rear-most axle of the first towed unit.

A technical benefit may include improved stability of the vehicle, this is since the rearmost axle may be subject to the highest lateral forces, and hence, higher stiffness for tires of said axle may improve absorption of rotational oscillations and maintain stability of the vehicle.

Optionally in some examples, including in at least one preferred example, the first towed unit is the rear-most unit of the one or more towed units .

A technical benefit may include improved stability of the vehicle, this is since the rearmost towed unit axle may be subject to the highest lateral forces out of the one or more towed units, and hence, higher stiffness for tires of said towed unit may improve absorption of rotational oscillations and maintain stability of the vehicle.

Optionally in some examples, including in at least one preferred example, the tires are arranged along the longitudinal axis such that tires of respective rearmost axles of all of the one or more towed units are associated with respective higher stiffness values than tires of respective other one or more axles of the same respective towed unit.

A technical benefit may include improved stability of the vehicle, this is since the rearmost axle may be subject to the highest lateral forces, and hence, higher stiffness for tires of said axle may improve absorption of rotational oscillations and maintain stability of the vehicle, in particular when this is performed by all towed units.

Optionally in some examples, including in at least one preferred example, the tires are arranged along the longitudinal axis such that tires of a second towed unit of the one or more towed units is, between a reference point along the longitudinal axis of the towed unit and a rear-end of the towed unit, ordered with increasing stiffness values towards the rear-end of the second towed unit.

A technical benefit may include improved stability of the vehicle, this is since increasing stiffness values towards the rear-end of the second towed unit ensures that more lateral forces are produced further to the rear, and hence, stability is maintained as any rotational oscillations may be absorbed.

Optionally in some examples, including in at least one preferred example, the second towed unit is the rear-most unit of the one or more towed units .

A technical benefit may include improved stability of the vehicle. This is since the feature results in a decrease in the rotational oscillation of the rear-most unit which is the one that may be causing the most instability hazard as it may be subject to highest oscillating rotational forces.

Optionally in some examples, including in at least one preferred example, the tires are arranged along the longitudinal axis such that tires of all of the one or more towed units are, between a reference point along the longitudinal axis of each respective towed unit and a rear-end of each respective towed unit, ordered with increasing stiffness values towards the rear-end of the respective towed unit.

A technical benefit may include improved stability of the vehicle, this is since the stability is improved further, and rotational oscillations are further absorbed if stiffness are increased to the rear-end of any towed unit, and hence, the configuration will be more stable for every towed unit having increased stiffness further to the rear of the respective unit.

Optionally in some examples, including in at least one preferred example, the tires have been selected in advance by a workshop or factory to have the respective stiffness values. The selection may be performed by a driver, in production, by a workshop.

The selection may relate to having as a first tire a towed unit, to have half stiffness of standard tires e.g., half a predefined stiffness value, a second tire further to the rear to be a standard tire with, e.g., the predefined stiffness value, and a rear-most tire to have 50% more stiffer than the standard tire, e.g., half more than the predefined stiffness value. The relationships of stiffness values may differ depending on vehicle and application.

A technical benefit may include improved stability of the vehicle, this is since stiffer tires may be selected in advance to be arranged further to the rear of the vehicle or respective towed units.

Optionally in some examples, including in at least one preferred example, the components comprises mechanical connections of axles of the vehicle and frames of the one or more towed units. In these examples, an axle stiffness value may represent the respective stiffness values. The axle stiffness value is associated with characteristics of the mechanical connections between the axles and frames of the one or more towed units. The axle stiffness value may indicate how much force is required to move the axle laterally with respect to the frame and/or may indicate a range of a lateral movement relative the axles and the frames.

A technical benefit may include improved stability of the vehicle, this is since the axles may be stiffer to the rear of the vehicle or respective towed unit such as to improve absorption of rotational oscillation and to reduce rearward amplification.

Optionally in some examples, including in at least one preferred example, the axle stiffness values have been configured by mechanically restricting or allowing lateral movement relative respective connected axles of the vehicle.

A technical benefit may include improved stability of the vehicle, this is since the mechanical connections can be configured such that axles are stiffer towards the rear of the vehicle and/or rear of each respective towed unit such as to absorb rotational oscillations that may cause rearward amplification and instability.

Optionally in some examples, including in at least one preferred example, the mechanical connections are arranged along the longitudinal axis such that mechanical connections of a rear-most axle of a third towed unit of the one or more towed units are associated with higher stiffness values than mechanical connections of one or more axles in front of the rear-most axle of the third towed unit.

A technical benefit may include improved stability of the vehicle, this is since increased stiffness towards the rear of the third towed unit improves absorption of rotational oscillations experienced by the third towed unit.

Optionally in some examples, including in at least one preferred example, the third towed unit is the rear-most unit of the one or more towed units .

A technical benefit may include improved stability of the vehicle, this is since the rearmost towed unit axle may be subject to the highest lateral forces out of the one or more towed units, and hence, higher stiffness for mechanical connections of said towed unit may improve absorption of rotational oscillations and maintain stability of the vehicle.

Optionally in some examples, including in at least one preferred example, the mechanical connections are arranged along the longitudinal axis such that mechanical connections of all of the one or more towed units are, between a reference point along the longitudinal axis of each respective towed unit and a rear-end of each respective towed unit, ordered with increasing stiffness values towards the rear-end of the respective towed unit.

A technical benefit may include improved stability of the vehicle, this is since the stability is improved further, and lateral forces are further absorbed if stiffness is increased to the rear-end of any towed unit, and hence, the configuration will be more stable for every towed unit having increased stiffness further to the rear of the respective units.

Optionally in some examples, including in at least one preferred example, the components comprise self-steered wheels , and wherein a steering stiffness value represents the respective stiffness values, wherein the steering stiffness value is associated with a stiffness in rotation characteristics of the self-steered wheels.

A technical benefit may include improved stability of the vehicle, this is since the rotation of the self-steered wheel may be stiffer to the rear of the vehicle or respective towed unit such as to improve absorption of lateral forces and to reduce rearward amplification.

Optionally in some examples, including in at least one preferred example, the steering stiffness values have been configured by mechanically restricting or allowing rotation of the self-steered wheels .

A technical benefit may include improved stability of the vehicle, this is since stiffness of the self-steered wheels, i.e., rotating characteristics, may be set such that lateral forces are more applied to the rear of the vehicle or respective towed units.

Optionally in some examples, including in at least one preferred example, the components comprise self-steered wheels, mechanical connections of axles of the vehicle , and tires. In these examples, the components are arranged along the longitudinal axis for a fourth towed unit of the one or more towed units such that a rear-side of a reference point along the longitudinal axis of the fourth towed unit is associated with higher stiffness values than the front-side of the reference point.

A technical benefit may include improved stability of the vehicle, this is since all components of different types may be arranged in combination such that there is higher stiffness values of the rear-side of the reference point of the fourth towed unit than for the front side of the reference point. This achieves improved stability with flexibility in which components to use for setting the stiffness.

Optionally in some examples, including in at least one preferred example, the components comprise self-steered wheels, mechanical connections of axles of the vehicle , and tires , and wherein the components are arranged along the longitudinal axis for all towed units of the one or more towed unit such that a rear-side of respective reference points along the longitudinal axis of each respective towed unit is associated with higher stiffness values than the respective front-side of the reference point of each respective towed unit.

A technical benefit may include improved stability of the vehicle, this is since the different components may be combined for all towed units to set the stiffness higher on the respective rear sides.

Optionally in some examples, including in at least one preferred example, the one or more towed units comprises one or more trailers or one or more dollys.

A technical benefit may include improved stability of the vehicle, this is since the lateral stability may be improved for either dollys or trailers, or both, and in either or both cases, the vehicle stability is improved during lateral movement.

Optionally in some examples, including in at least one preferred example, the one or more towed units comprises at least two trailers.

A technical benefit may include improved stability of the vehicle when the vehicle is represented by a combination vehicle of at least two trailers.

In examples above, the technical benefit may in particular relate to improved lateral stability when the vehicle also has a longitudinal motion, such as along the longitudinal axis.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle 1 according to an example.
**FIG. 2** illustrates another example of the vehicle 1.
**FIGS. 3a****-b** illustrate example components of the vehicle 1.
**FIG. 4a****-d** illustrates results of simulations of an example vehicle according to an example.
**FIG. 5** is another view of **FIG. 1****,** according to an example.

### DETAILED DESCRIPTION

The detailed description set forth below provides information and examples of the disclosed technology with sufficient detail to enable those skilled in the art to practice the disclosure.

In examples herein, it may be assumed that if a towed unit such as a trailer had one axle, the towed unit would be more stable if the axle were more towards the rear of the trailer. However, there is a legal and physical limit to how much vertical load an axle can carry. Therefore, most towed units have more than one axle. Examples herein therefore defined examples of increasing a lateral effect of towed unit axles while still having the same vertical load for each axle.

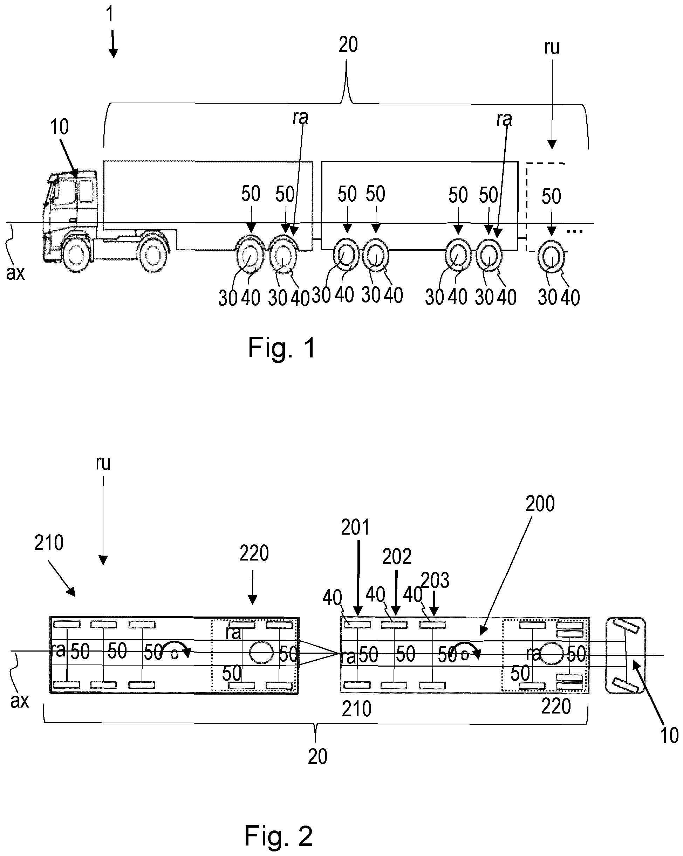

**FIG. 1** is an exemplary **vehicle 1** according to an example.

The vehicle 1 comprises a towing unit 10 and one or more towed units 20 extending along a longitudinal axis ax. The longitudinal axis ax may be along an intended driving direction of the vehicle. The longitudinal axis ax may be parallel to ground. The vehicle may be arranged to travel longitudinally forward along the longitudinal axis ax, where forward is in the direction longitudinally in front of the towing unit, i.e., away from the one or more towed units 20.

The vehicle 1 may be any suitable vehicle which may be arranged to tow the one or more towing units 20.

Preferably, the vehicle 1 is a combination vehicle but other suitable vehicles may also apply to examples herein.

A combination vehicle may be a vehicle comprising a towing unit and one or more towed units.

The vehicle 1 may be a semi-trailer or a truck towing one or more trailers.

For example, the towing unit 10 may comprise a truck or a tractor for towing the one or more towed units 20.

The one or more towed units 20 may comprise one or more trailers and/or one or more dollys.

The dollys or trailers may be electrically driven or passively towed dolly or trailers; or a combination thereof.

The one or more towed units 20 may comprise at least two trailers. Typically each trailer may further be connected to a respective dolly. Examples herein are also applicable for one trailer. It shall however be noted that the technical benefits increase per trailer or towed unit as problems with instability is increasingly problematic and need to be managed for an increased number of towed units.

Preferably, the vehicle 1 is a combination vehicle comprising multiple trailers, such as three or more trailers.

Each respective towed unit 20 may comprise respective **axles 50,** respective **wheels 30,** and respective **tires 40.**

The vehicle 1 is arranged with components associated with respective stiffness values affecting lateral forces applied to the vehicle 1 as the vehicle 1 is moving laterally. The different components may comprise tires, mechanical connection, and/or self-steered wheels, all which will be explained in examples below or above.

The stiffness values of examples herein indicate stiffness which may be defined for tires as a relation between a lateral slip and lateral tire force. For the same lateral slip if the stiffness increases the force may increase as well in a corresponding manner, e.g., as in equation form: (lateral tire force) = (tire stiffness) x (lateral tire slip). Similarly stiffness may be defined for other components as a relation between lateral slip of the vehicle or respective tire of the same axle of the component, and a lateral force of the component.

Stiffness per axle 50 in each respective towed unit 20 may relate to stiffness by stiffness of tires 40, stiffer mechanical connections, stiffer self-steered wheels, or a combination thereof.

The vehicle 1 is configured such that the components are arranged along the longitudinal axis ax to have increasing stiffness values towards a rear of the vehicle 1 and/or a rear of the respective one or more towed units 20.

Internally arranged as used herein may mean that there is a placement order of the respective components along the longitudinal axis, i.e., some components are further to the rear or to the front of the vehicle.

In examples herein, the towing unit 10 may be considered to be in the front, i.e., the front-most part of the vehicle 1 and may be considered to be on the opposite side along the longitudinal axis of the rear-most towed unit.

In other words, stiffness for the vehicle 1 may increase further to the rear of the vehicle 1 and/or respective one or more towed unit(s), i.e., away from the towing unit 1 along the longitudinal axis.

For example, each respective towed unit comprises a **rear-most axle ra,** and stiffness may be configured for one or more respective towed units such that the stiffness is highest for the respective rear-most axle ra, e.g., by stiffer tires 40, stiffer mechanical connections, stiffer self-steered wheels, or a combination thereof.

Furthermore, the vehicle 1 comprises a **rear-most unit ru,** representing the towed unit out of the one or more towed units 20 furthest from the towing unit 10 along the longitudinal axis ax. The rear-most unit ru may not tow any other unit.

The one or more towed units 20 may comprise units which have increased stiffness further to the rear of the respective unit, but may also comprise one or more units which do not have increased stiffness to the rear of the respective unit. This is since not all units may be configured to improve lateral stability as in examples herein, however, stability will increase even if only one towed unit has increased stiffness towards the rear of the respective unit.

Since longer combination vehicles are typically more unstable when moving laterally, the examples herein are increasingly beneficial the longer the vehicle and/or for increasing number of towed units.

In some examples, the components comprise tires 40, e.g., at least two per axle of the vehicle 1. There are usually 2 or 4 tires per axle. A minimum axle is 1 per towed unit but there is no upper limit more than what may be considered practical for production or maneuverability or in some scenarios, legal.

In these examples, respective cornering stiffness of the tires 40 represent the respective stiffness values. Cornering stiffness may relate to how stiff the tires 40 are in a lateral direction which also relates to how much force is generated in the lateral direction for the respective tire when moving laterally.

In some examples, the tires 40 are arranged along the longitudinal axis ax such that tires 40 of a rearmost axle ra of a first towed unit of the one or more towed units 20 is associated with higher stiffness values than tires 40 of one or more axles in front of the rear-most axle ra of the first towed unit. The first towed unit may be any of the one or more towed units 20. In front of the rear-most axle ra may mean closer to the towing unit 10 along the longitudinal axis ax.

In some examples, the first towed unit is the rear-most unit ru of the one or more towed units 20.

In some examples, the tires 40 are arranged along the longitudinal axis ax such that tires 40 of respective rearmost axles of **all** of the one or more towed units 20 are associated with respective higher stiffness values than tires 40 of respective other one or more axles of the same respective towed unit.

**FIG. 2** illustrates another example of the vehicle 1 seen from above where **lateral forces 201, 202, 203,** are illustrated, which forces are increased to the rear of a respective towed unit of the one or more towed units 20. The lateral forces 201, 202, 203 may be applied to the axles 50 and/or tires 40 of the respective vehicle unit due to a lateral motion of the vehicle 1 such as during a lane change. In this example, it may be seen that the rear-most axle ra is associated with the highest stiffness and axles 50 further to the front of the longitudinal axis ax may be less and less stiff. The stiffness of each axle 50 may relate to stiffer tires 40, stiffness in mechanical connections of the axles to a frame of the respective towed unit, or stiffness in rotation of self-steered wheels of the respective axle, or a combination thereof.

Since stiffness is increased further to the rear of the respective towed unit, stability is increased and rearwards amplification is reduced as the vehicle 1 travels laterally.

FIG. 2 further illustrates a **center of gravity 200** of the respective towed unit. In some examples, axles 50 and/or tires 40 in front of the center of gravity 200 may be associated with a set stiffness, and the axles 50 and/or tires 40 behind the center of gravity 200 may be associated with increasing stiffness values towards the rear of the respective vehicle unit.

As illustrated in FIG. 2, the one or more towed units may comprise one or more **dollys 220** and one or more **trailers 210.**

The center of gravity 200 may relate to a point on the longitudinal axis ax.

While only one towed unit is exemplified with forces and stiffness and center of gravity 200 in FIG. 2, the examples apply to any or all of the one or more towed units 20.

In some examples, the tires 40 are arranged along the longitudinal axis ax such that tires 40 of a second towed unit of the one or more towed units 20 is, between a reference point along the longitudinal axis ax of the towed unit and a rear-end of the towed unit, ordered with increasing stiffness values towards the rear-end of the second towed unit.

The second towed unit may be any of the one or more towed units 20, such as the first towed unit and/or the rear-most towed unit ru.

In some examples, the tires 40 are arranged along the longitudinal axis ax such that tires 40 of **all** of the one or more towed units 20 are, between a reference point along the longitudinal axis ax of each respective towed unit and a rear-end of each respective towed unit, ordered with increasing stiffness values towards the rear-end of the respective towed unit.

For example, the reference point as discussed in examples above may be any suitable point on the longitudinal axis such as the center of gravity 200, but other reference points may also be used as long as increased stiffness towards the rear of the respective towed unit is achieved. As other examples, the reference point may be a coupling point with another towed unit or the towing unit 10, or a position of a fifth wheel, or a set specific axle where increase of stiffness towards the rear is to begin.

In examples herein, the tires 40 have been selected in advance by a workshop or factory to have the respective stiffness values. In other words, the tires 40 have been intentionally selected to be part of the vehicle configuration to improve stability.

In some examples, the components comprise mechanical connections 501 of axles the vehicle 1 and frames of the one or more towed units 20, and wherein an axle stiffness value represent the respective stiffness values, wherein the axle stiffness value is associated with characteristics of the mechanical connections 501 between the axles and frames of the one or more towed units 20 where the axle stiffness value indicates how much force is required to move the axle laterally with respect to the frame and/or may indicate a range of a lateral movement relative the axles and the frames.

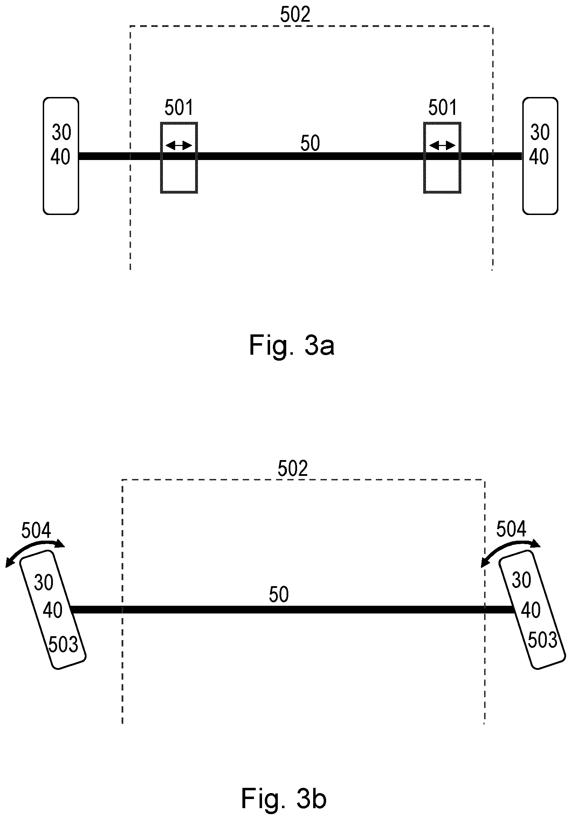

**FIGS. 3a****-b** illustrates examples of other manners of handling stiffness of axles 50 than by adjusting cornering stiffness on tires 40.

For example, in **FIG. 3a****,** an axle 50 may be attached to a **frame 502** of a towed unit of the one or more towed units 20, such as attached to a trailer frame. The axle 50 may be attached to the frame 502 by means of **mechanical connections 501.** Typically axles 50 are normally attached by the mechanical connections 501 connecting to the frame 502 on either side of the axle 50, and by holding the axle 50 towards the frame 502. In examples herein, the mechanical connections 501 may be adjusted to be stiffer or softer to allow a lateral movement of the axle 50 such as to control the stiffness of the axle 50 in the lateral direction. Another way to control the stiffness of the axle 50 is to use different materials in the mechanical connections 501 such that the firmness of the mechanical connections 501 is stiffer or softer, thereby allowing for or restricting stiffness of the axle 50. Softer as used in examples herein may mean that the connections are more compliant. It may be noted that the softer connections 501 e.g., below a threshold, may still not let the axle 50 move forward and backward or twist and should be designed to only be stiffer or more compliant in the lateral direction.

In other words, there may be two ways that the mechanical connections 501 have different stiffness:
1) the material used in the connection is thicker or thinner i.e. Thicker steel would make it stiffer.
2) It is possible to place material, e.g., bushing, that is in the mechanical connection 501 between the axle 50 and the frame 502. The material may have different stiffness. For example elastic materials of different stiffness may be placed in between the axle 50 and the frame 501. The material may be in some other casing that is holding the material together.

In some examples, the axle stiffness values have been configured by mechanically restricting or allowing lateral movement relative respective connected axles of the vehicle 1.

In some examples, the mechanical connections 501 are arranged along the longitudinal axis ax such that mechanical connections 501 of a rear-most axle of a third towed unit of the one or more towed units 20 is associated with higher stiffness values than mechanical connections 501 of one or more axles in front of the rear-most axle of the third towed unit.

The third towed unit may be any of the one or more towed units 20, e.g., any one or more out of: the first towed unit, the second towed unit, and the rear-most unit of the one or more towed units 20.

In some examples, the mechanical connections 501 are arranged along the longitudinal axis ax such that mechanical connections 501 of **all** of the one or more towed units 20 are, between a reference point along the longitudinal axis ax of each respective towed unit and a rear-end of each respective towed unit, ordered with increasing stiffness values towards the rear-end of the respective towed unit. The reference point may be a reference point as discussed with reference to FIG. 2.

**FIG. 3b** illustrates an axle 50 comprising **self-steered wheels 503.** The self-steered wheels 503 may be any suitable wheels which may be able to rotate themselves, e.g., by having a passive degree of freedom. The self-steered wheels 503 may sometimes be limited to a range of motion 504, e.g., a set angle.

In some examples, the components of the vehicle 1 comprise the self-steered wheels 503. In these examples, a steering stiffness value may represent the respective stiffness values. The steering stiffness value may be associated with a stiffness in rotation characteristics of the self-steered wheels, i.e., smaller rotation characteristics may relate to increased stiffness.

In some examples, the steering stiffness values have been configured by mechanically restricting or allowing rotation of the self-steered wheels 503, e.g., the rotation may be defined to have a set stiffness depending on stiffness needed for the respective axle 50.

With regards to all of FIGS 1-3, the components may comprise one or more of self-steered wheels 503, mechanical connections 501 of axles 50 of the vehicle 1, and tires 40. In these examples, the components may be arranged along the longitudinal axis ax for a fourth towed unit of the one or more towed units 20 such that a rear-side of a reference point along the longitudinal axis ax of the fourth towed unit is associated with higher stiffness values than the front-side of the reference point.

The reference point may be any suitable reference point, e.g., as discussed with respect to FIG. 2.

The fourth towed unit may be any of the one or more towed units 20, e.g., any one or more out of: the first towed unit, the second towed unit, the third towed unit, and the rear-most unit of the one or more towed units 20.

In some examples, the components comprise self-steered wheels 503, mechanical connections 501 of axles 50 of the vehicle 1, and tires 40. In these examples, the components may be arranged along the longitudinal axis ax for all towed units of the one or more towed unit such that a rear-side of respective reference points along the longitudinal axis ax of each respective towed unit is associated with higher stiffness values than the respective front-side of the reference point of each respective towed unit.

Further examples related to all or any of FIGS 1-3 will be discussed below.

In some examples herein, the tires 40 may be associated with physical properties such as cornering stiffness which determine how much they flex laterally under a certain tire force. Hence some examples herein increase the lateral stiffness of the tires 40 that are placed towards the rear of the respective towed unit. The lateral stiffness may determine how much of the lateral force each axle of the trailer carries. For example, for a 2 axle trailer as part of the one or more towed units 20, if the same total lateral stiffness is wanted, the lateral stiffness of the rear tire may be increased 50% and the front tire lateral stiffness may be decreased by 50%. The percentages given are examples and may be optimized for best performance. This may result in the axles 50 still following requirements on vertical loads each axle can carry, but results in the axles virtually moving towards the rear for increased yaw stability. The effects of this example may be the lateral forces 201, 202, 203 as illustrated in FIG. 2. The lateral forces 201, 202, 203 on the tires 40 may determine the lateral motion of the respective towed unit. When tire cornering stiffnesses are increased towards the rear of each axle group of the respective towed unit 20, the corresponding lateral forces 201, 202, 203 also increase towards the rear. This causes a stabilizing effect.

A change in stiffness of the mechanical connection 501 of the axles 50 to the one or more towed units 20 such that the connections are stiffer towards the rear of the trailer and softer towards the front of the trailer may further cause a stabilizing effect, and may be combined with increasing tire stiffness.

When the axles 50 are self-steering comprising certain stiffness characteristics of the self-steered wheels 503, it may further improve stability. The axles 50 may be designed such that the front-most axles 50 of the respective towed unit may steer to decrease the stiffness of the axle 50, whereas the rear-most axles of the respective towed unit may steer to increase the stiffness of the axle. This is typically performed by mechanical design and is not actively steered. There may be compliances in attachments of the tires 40 to the one or more towed units 20 that may cause this steering depending on a respective lateral force applied on each axle 50.

In any of the example herein, the vehicle 1 may relate to a number of different types of combination vehicles, also referred to as a vehicle configuration.

The vehicle 1 may be or comprise any of:
- A tractor and a trailer
- A tractor, a semitrailer, and a center axle trailer,
- A truck and a center axle trailer
- A truck, a dolly, and a semitrailer
- A truck and a full trailer,
- An A-double, e.g., as in FIG.2, and
- A B-double

A or B double may be predefined types of combination vehicles.

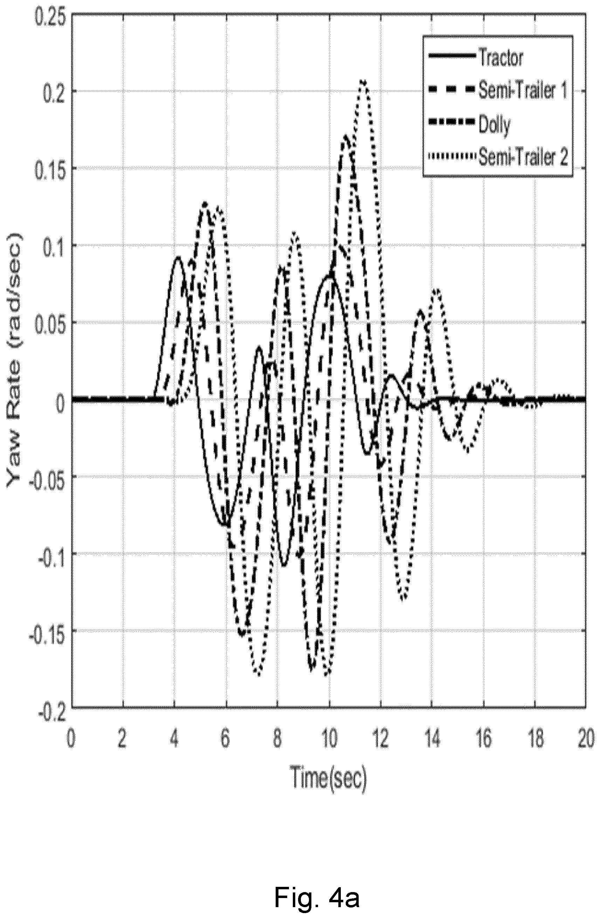

In below examples of FIGS. 4a-d, the vehicle may be a combination vehicle such as a double A combination vehicle, where the effect of above-mentioned examples can be seen in simulations of **FIGS. 4a****-d** such as illustrating changing tire cornering stiffness properties of the tires 40.

The below results may be from using the vehicle 1, e.g., as illustrated in FIG. 2, as an A-Double combination vehicle.

The simulations in the examples are performed for the vehicle 1 performing a double lane change maneuver, i.e., travel longitudinally such as along the longitudinal axis ax and performing a lateral motion to switch lanes twice. The vehicle 1 changes lanes to the left lane in the examples. After this is completed, the vehicle 1 moves back to the right lane. The plots of FIGS 4a-d show the yaw rate, i.e., angular velocity in the rotational direction, for each of the units in the combination.

FIG. 4a shows a response of the vehicle 1 to a double lane change with maneuver frequency of 0.25 Hz traveling at 80km/h. Simulations are done on high fidelity model.

The legend shows the order of the yaw rates of the tractor 10, and the one or more towed units 20: a semi-trailer 1, a dolly, and a semi-trailer 2. The y-axis is the yaw rate and the x-axis is time in seconds.

The stiffness values of the vehicle 1 is set to an initial value.

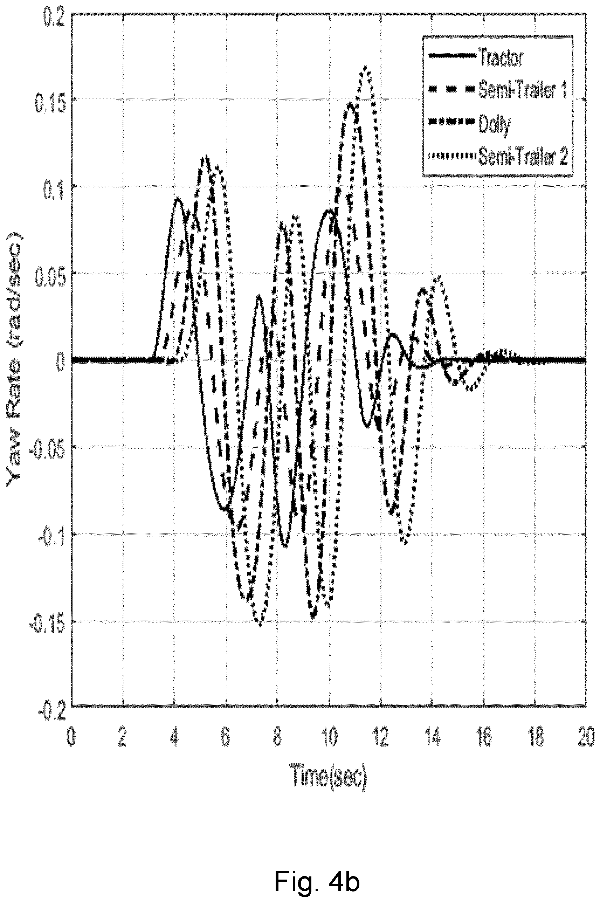

**FIG. 4b** discloses an effect of changing the tire cornering stiffness (lateral tire stiffness) in the semi-trailer 1.

With regards to FIG. 4a: Axle 4 stiffness 0.5 of original. Axle 6 stiffness 1.5 of original. Axle 7 stiffness 0.5 of original. Axle 8 stiffness 1.5 of original. Axle 9 stiffness 0.5 of original. Axle 11 stiffness 1.5 of original. In other words, stiffness is changed compared to FIG 4a.

The yaw rates in the trailers decrease for this tire stiffness configuration compared to Configuration 1. The maximum yaw rates have decreased and an improvement is seen.

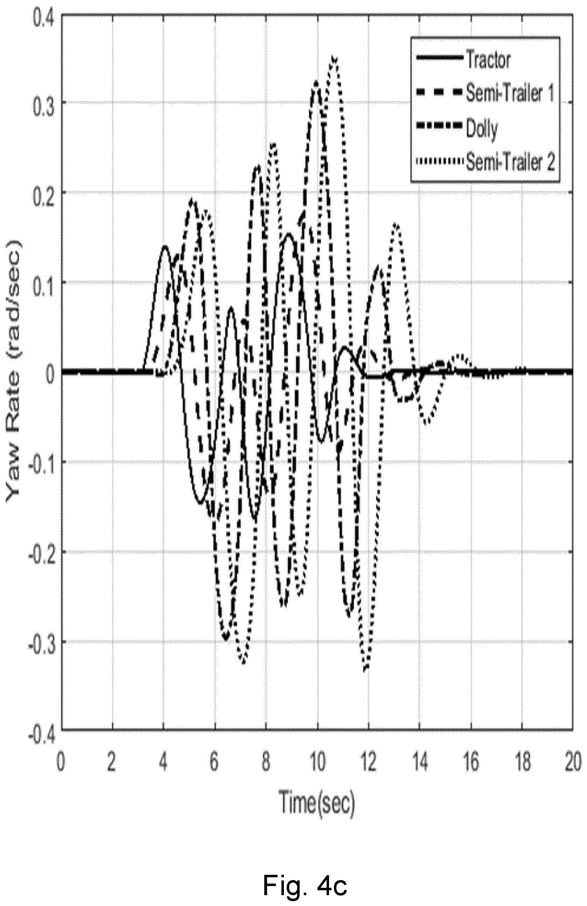

**FIG. 4c** discloses the vehicle 1 response to a double lane change with maneuver frequency of 0.3 Hz traveling at 80km/h. The stiffness values are set to an initial value.

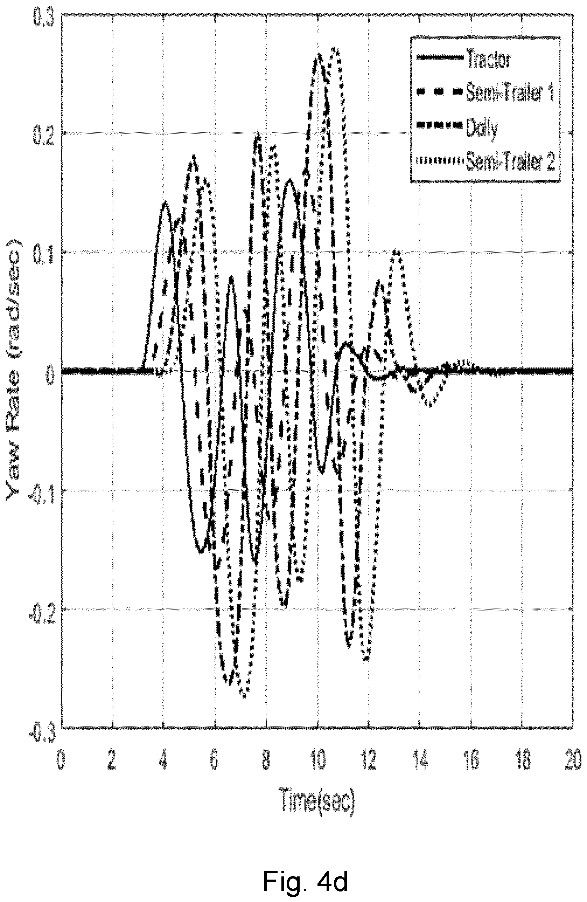

**FIG. 4d** discloses simulations for the vehicle 1 response to a double lane change with maneuver frequency of 0.3 Hz traveling at 80km/h.

With regards to FIGS. 4c: Axle 4 stiffness 0.5 of original. Axle 6 stiffness 1.5 of original. Axle 7 stiffness 0.5 of original. Axle 8 stiffness 1.5 of original. Axle 9 stiffness 0.5 of original. Axle 11 stiffness 1.5 of original. In other words, stiffness is changed compared to FIG 4c.

The yaw rates in the trailers decrease for this tire stiffness configuration compared to FIGS 4c. improvement in stability is seen. It may be observed that maximum yaw rates have decreased and an improvement is seen" when compared to the same frequency input, thereby improving stability of the vehicle 1.

While the exact numbers of above FIGS 4a-d may not be the same for every scenario, the results show that increased stiffness further to the rear of the one or more towed units 20 increase stability of the vehicle 1.

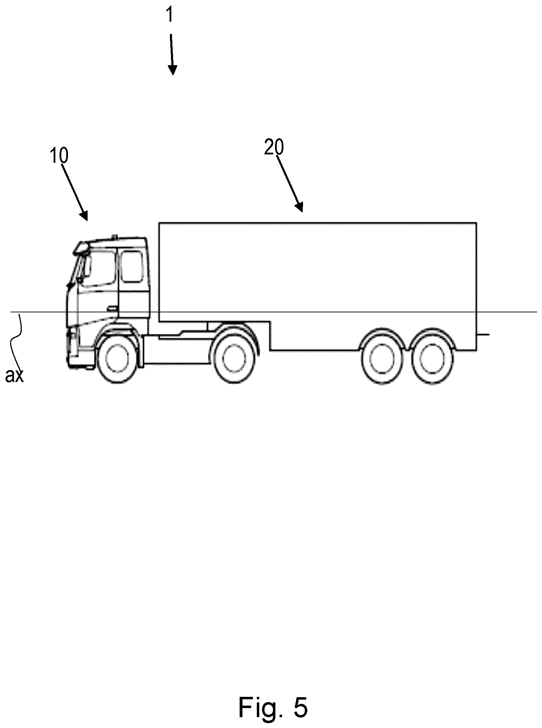

**FIG. 5** is another view of **FIG. 1****,** according to an example. The vehicle 1 comprising the towing unit 10 and the one or more towed units 20 extending along the longitudinal axis ax is provided. The vehicle 1 is arranged with components associated with respective stiffness values affecting lateral forces applied to the vehicle 1 as the vehicle 1 is moving laterally. The vehicle 1 is configured such that the components are arranged along the longitudinal axis ax to have increasing stiffness values towards a rear of the vehicle 1 and/or a rear of the respective one or more towed units 20.

Below follows a list of Examples 1-20 which may respectively be combined in any suitable manner with the above-mentioned examples.
**Example 1.** A vehicle 1 comprising a towing unit and one or more towed units 20 extending along a longitudinal axis ax, the vehicle 1 being arranged with components associated with respective stiffness values affecting lateral forces applied to the vehicle 1 as the vehicle 1 is moving laterally, the vehicle 1 being configured such that the components are arranged along the longitudinal axis ax to have increasing stiffness values towards a rear of the vehicle 1 and/or a rear of the respective one or more towed units 20.
**Example 2.** The vehicle 1 of Example 1 wherein the components comprises tires 40, and wherein respective cornering stiffness of the tires 40 represent the respective stiffness values.
**Example 3.** The vehicle 1 of Example 1 or 2 wherein the tires 40 are arranged along the longitudinal axis ax such that tires 40 of a rearmost axle of a first towed unit of the one or more towed units 20 is associated with higher stiffness values than tires 40 of one or more axles in front of the rear-most axle of the first towed unit.
**Example 4.** The vehicle 1 of Example 3 where the first towed unit is the rear-most unit of the one or more towed units 20.
**Example 5.** The vehicle 1 of Example 3 or 4, wherein the tires 40 are arranged along the longitudinal axis ax such that tires 40 of respective rearmost axles of all of the one or more towed units 20 are associated with respective higher stiffness values than tires 40 of respective other one or more axles of the same respective towed unit.
**Example 6.** The vehicle 1 of any one of Examples 1-5 wherein the tires 40 are arranged along the longitudinal axis ax such that tires 40 of a second towed unit of the one or more towed units 20 is, between a reference point along the longitudinal axis ax of the towed unit and a rear-end of the towed unit, ordered with increasing stiffness values towards the rear-end of the second towed unit.
**Example 7.** The vehicle 1 of Example 6 where the second towed unit is the rear-most unit of the one or more towed units 20.
**Example 8.** The vehicle 1 of Example 6 or 7, wherein the tires 40 are arranged along the longitudinal axis ax such that tires 40 of all of the one or more towed units 20 is, between a reference point along the longitudinal axis ax of each respective towed unit and a rear-end of each respective towed unit, ordered with increasing stiffness values towards the rear-end of the respective towed unit.
**Example 9.** The vehicle 1 of any of Examples 2-8 wherein the tires 40 have been selected to have the respective stiffness values.
**Example 10.** The vehicle 1 of any of Examples 1-9 wherein the components comprises mechanical connections 501 of axles 50 the vehicle 1 and frames of the one or more towed units 20, and wherein an axle stiffness value represent the respective stiffness values, wherein the axle stiffness value is associated with characteristics of the mechanical connections 501 between the axles and frames of the one or more towed units 20 where the axle stiffness value indicates how much force is required to move the axle laterally with respect to the frame and/or may indicate a range of a lateral movement relative the axles and the frames.
**Example 11.** The vehicle 1 of Example 10 wherein the axle stiffness values have been configured by mechanically restricting or allowing lateral movement relative respective connected axles of the vehicle 1.
**Example 12.** The vehicle 1 of Example 10 or 11 wherein the mechanical connections 501 are arranged along the longitudinal axis ax such that mechanical connections 501 of a rear-most axle of a third towed unit of the one or more towed units 20 is associated with higher stiffness values than mechanical connections 501 of one or more axles in front of the rear-most axle of the third towed unit.
**Example 13.** The vehicle 1 of Example 12 where the third towed unit is the rear-most unit of the one or more towed units 20.
**Example 14.** The vehicle 1 of any of Examples 10-13, wherein the mechanical connections 501 are arranged along the longitudinal axis ax such that mechanical connections 501 of all of the one or more towed units 20 is, between a reference point along the longitudinal axis ax of each respective towed unit and a rear-end of each respective towed unit, ordered with increasing stiffness values towards the rear-end of the respective towed unit.
**Example 15.** The vehicle 1 of any of Examples 1-14, wherein the components comprises self-steered wheels 503, and wherein a steering stiffness value represent the respective stiffness values, wherein the steering stiffness value is associated with a stiffness in rotation characteristics of the self-steered wheels.
**Example 16.** The vehicle 1 of Example 15, wherein the steering stiffness values have been configured by mechanically restricting or allowing rotation of the self-steered wheels 503.
**Example 17.** The vehicle 1 of any of Examples 1-16, wherein the components comprises self-steered wheels 503, mechanical connections 501 of axles 50 of the vehicle 1, and tires 40, and wherein the components are arranged along the longitudinal axis ax for a fourth towed unit of the one or more towed units 20 such that a rear-side of a reference point along the longitudinal axis ax of the fourth towed unit is associated with higher stiffness values than the front-side of the reference point.
**Example 18.** The vehicle 1 of any of Examples 1-16 wherein the components comprises self-steered wheels 503, mechanical connections 501 of axles 50 of the vehicle 1, and tires 40, and wherein the components are arranged along the longitudinal axis ax for all towed units of the one or more towed unit such that a rear-side of respective reference points along the longitudinal axis ax of each respective towed unit is associated with higher stiffness values than the respective front-side of the reference point of each respective towed unit.
**Example 19.** The vehicle 1 of any of Examples 1-18 wherein the one or more towed units 20 comprises one or more trailers or one or more dollys .
**Example 20.** The vehicle 1 of any of Examples 1-19 wherein the one or more towed units 20 comprises at least two trailers.

While Example 20 indicates the use of at least two trailers, there are also benefits of vehicles comprising one trailer.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle (1) comprising a towing unit and one or more towed units (20) extending along a longitudinal axis (ax), the vehicle (1) being arranged with components associated with respective stiffness values affecting lateral forces applied to the vehicle (1) as the vehicle (1) is moving laterally, the vehicle (1) being configured such that the components are arranged along the longitudinal axis (ax) to have increasing stiffness values towards a rear of the vehicle (1) and/or a rear of the respective one or more towed units (20).

2. The vehicle (1) of claim 1 wherein the components comprise tires (40), and wherein respective cornering stiffness of the tires (40) represent the respective stiffness values.

3. The vehicle (1) of claim 2 wherein the tires (40) are arranged along the longitudinal axis (ax) such that tires (40) of a rearmost axle of a first towed unit of the one or more towed units (20) is associated with higher stiffness values than tires (40) of one or more axles in front of the rear-most axle of the first towed unit, preferably wherein the first towed unit is the rear-most unit of the one or more towed units (20).

4. The vehicle (1) of claim 3, wherein the tires (40) are arranged along the longitudinal axis (ax) such that tires (40) of respective rearmost axles of all of the one or more towed units (20) are associated with respective higher stiffness values than tires (40) of respective other one or more axles of the same respective towed unit.

5. The vehicle (1) of any one of claims 1-4 wherein the tires (40) are arranged along the longitudinal axis (ax) such that tires (40) of a second towed unit of the one or more towed units (20) is, between a reference point along the longitudinal axis (ax) of the towed unit and a rear-end of the towed unit, ordered with increasing stiffness values towards the rear-end of the second towed unit, preferably, wherein the second towed unit is the rear-most unit of the one or more towed units (20).

6. The vehicle (1) of claim 5, wherein the tires (40) are arranged along the longitudinal axis (ax) such that tires (40) of all of the one or more towed units (20) is, between a reference point along the longitudinal axis (ax) of each respective towed unit and a rear-end of each respective towed unit, ordered with increasing stiffness values towards the rear-end of the respective towed unit.

7. The vehicle (1) of any of claims 2-6 wherein the tires (40) have been selected in advance by a workshop or factory to have the respective stiffness values.

8. The vehicle (1) of any of claims 1-7 wherein the components comprises mechanical connections (501) of axles (50) the vehicle (1) and frames of the one or more towed units (20), and wherein an axle stiffness value represents the respective stiffness values, wherein the axle stiffness value is associated with characteristics of the mechanical connections (501) between the axles and frames of the one or more towed units (20) where the axle stiffness value indicates how much force is required to move the axle laterally with respect to the frame.

9. The vehicle (1) of claim 8 wherein the axle stiffness values have been configured by mechanically restricting or allowing lateral movement relative respective connected axles of the vehicle (1).

10. The vehicle (1) of claim 8 or 9, wherein the mechanical connections (501) are arranged along the longitudinal axis (ax) such that mechanical connections (501) of a rear-most axle of a third towed unit of the one or more towed units (20) is associated with higher stiffness values than mechanical connections (501) of one or more axles in front of the rear-most axle of the third towed unit, preferably wherein the third towed unit is the rear-most unit of the one or more towed units (20).

11. The vehicle (1) of any of claims 8-10, wherein the mechanical connections (501) are arranged along the longitudinal axis (ax) such that mechanical connections (501) of all of the one or more towed units (20) are, between a reference point along the longitudinal axis (ax) of each respective towed unit and a rear-end of each respective towed unit, ordered with increasing stiffness values towards the rear-end of the respective towed unit.

12. The vehicle (1) of any of claims 1-11 wherein the components comprise self-steered wheels (503), and wherein a steering stiffness value represents the respective stiffness values, wherein the steering stiffness value is associated with a stiffness in rotation characteristics of the self-steered wheels.

13. The vehicle (1) of claim 12 wherein the steering stiffness values have been configured by mechanically restricting or allowing rotation of the self-steered wheels (503).

14. The vehicle (1) of any of claims 1-13 wherein the components comprise self-steered wheels (503), mechanical connections (501) of axles (50) of the vehicle (1), and tires (40), and wherein the components are arranged along the longitudinal axis (ax) for a fourth towed unit of the one or more towed units (20) such that a rear-side of a reference point along the longitudinal axis (ax) of the fourth towed unit is associated with higher stiffness values than the front-side of the reference point.

15. The vehicle (1) of any of claims 1-14 wherein the components comprises self-steered wheels (503), mechanical connections (501) of axles (50) of the vehicle (1), and tires (40), and wherein the components are arranged along the longitudinal axis (ax) for all towed units of the one or more towed unit such that a rear-side of respective reference points along the longitudinal axis (ax) of each respective towed unit is associated with higher stiffness values than the respective front-side of the reference point of each respective towed unit.
